# EUROPEAN PATENT APPLICATION

(11) **EP 2 166 258 A1**
(43) Date of publication of application: **24.03.2010**
(21) Application number: 08752349.4
(22) Date of filing: 25.04.2008
(51) Int. Cl.: F16J 15/34, C04B 35/565, F16C 33/24

(54) **CERAMIC SLIDING MEMBER FOR PURE WATER**

(30) Priority: 25.04.2007 JP 2007115250
(71) Applicant: EBARA CORPORATION, Ohta-ku Tokyo 144-8510 (JP); NIPPON PILLAR PACKING CO., LTD., Osaka-shi, Osaka 532-0022 (JP)
(72) Inventor: NAGASAKA, Hiroshi, Kanagawa 235-0023 (JP); YOKOTA, Hiroshi, Tokyo 144-8510 (JP); KAWABATA, Junya, Tokyo 144-8510 (JP); KANNO, Hideki, Tokyo 144-8510 (JP); HOSHINO, Kenichi, Tokyo 144-8510 (JP); FUJIWARA, Satoshi, Sanda-shi Hyogo 669-1333 (JP); OKUMACHI, Eiji, Sanda-shi Hyogo 669-1333 (JP)
(74) Representative: Carstens, Dirk Wilhelm
(86) International application number: PCT/JP2008/058448
(87) International publication number: WO 2008/133354

(57) **Abstract**

A ceramics sliding member for use in ultrapure water or pure water of the present invention is made of an SiC sintered body. The SiC sintered body includes β-SiC at a ratio of 20% or more thereto and has an average crystal structure whose aspect ratio is 2 or greater.

## Description

### Technical Field

The present invention relates to a ceramics sliding member for use as a bearing, a mechanical seal, etc. of rotary machinery in ultrapure water having an electrical resistivity of 10 MΩ·cm or higher or pure water having an electrical resistivity of 1 MΩ·cm or higher.

### Background Art

Canned motor pumps, as an example of rotary machinery, generally include two radial slide bearings which support the respective opposite ends of a main shaft and two thrust slide bearings which bear thrust loads acting on the main shaft in opposite axial directions at loaded and non-loaded sides thereof. Ceramics bearings, which are of excellent wear resistance and corrosion resistance, are widely used in the art as such slide bearings. Slide bearings (ceramics bearings) are lubricated and a motor is cooled by a fluid which is handled by the motor pump and self-circulated in the motor pump.

Many rotary machines are of such a structure that fixed and rotatable parts have end surfaces or sliding surfaces which come into contact with each other in operation. Sliding members, such as slide bearings, seal members, etc., are used as parts in regions where rotors and stators are held in mechanically sliding relation to each other. For example, a slide bearing includes a rotatable member fixed to a main shaft and rotatable in unison with the main shaft, and a fixed member fixed to a casing, the rotatable member and the fixed member being configured to make sliding contact with each other. In general, one of the rotatable and fixed members of the ceramics bearing is made of silicon carbide (SiC), and the other of a carbon material (C), or both the rotatable and fixed members are made of SiC. SiC is in the form of α-SiC having a wurtzite crystal structure including a hexagonal crystal system.

Ceramic seal members made of α-SiC are also widely used as seal members to provide a watertight seal between a main shaft and a casing of rotary machinery. In other words, ceramics sliding members, such as ceramics bearings, ceramic seal members, etc., are widely used in rotary machines.

SiC may be manufactured by several methods. Among those methods is a sintering method, which is of utmost important, capable of manufacturing SiCs having various characteristics depending on starting materials and sintering conditions. The SiCs that are manufactured are put to practical use. These SiCs are materials which are generally of excellent wear resistance in addition to excellent thermal, chemical, and mechanical characteristics, and are widely used as sliding members such as bearings, mechanical seals, etc.

### Disclosure of Invention

For example, some canned motor pumps handle tap water having an electrical resistivity of 0.01 MΩ·cm or higher as a handled fluid and employ ceramics bearings as slide bearings. In such canned motor pumps, the ceramics bearings can be in service for a long time while sliding surfaces of the ceramics bearings (slide bearings) are being effectively lubricated by tap water (handled fluid). Other canned motor pumps handle pure water having an electrical resistivity of 1 MΩ·cm or higher or ultrapure water having an electrical resistivity of 10 MΩ·cm or higher as a handled fluid, and employ ceramics bearings as slide bearings. In those other canned motor pumps, however, when sliding surfaces of the ceramics bearings are lubricated by pure water or ultrapure water (handled fluid), the sliding surfaces gradually develop sliding wear marks in the pure water or ultrapure water, leading to wear which is considered to be sliding damage to the sliding surfaces.

Table 1 shown below illustrates the results of a frictional wear test in which members of α-SiC were caused to slide against each other at a peripheral speed of 7.59 m/s while being pressed under a pressure of 0.5 MPa for 100 hours in the presence of handled fluids having different electrical resistivities (tap water, pure water, and ultrapure water).

**[Table 1]**

| Electrical resistivity (MΩ·cm) | Results of frictional wear test | Remarks | |
|---|---|---|---|
| 0.01 | ○ | No damage | Tap water |
| 1 | △ | Slight damage | Pure water |
| 2 | △ | Slight damage | Pure water |
| 14 | × | Damage | Ultrapure water |
| 18 | × | Damage | Ultrapure water |

The cause of the results is not necessarily clear. However, when sliding surfaces of ceramic bearings are held in sliding contact with each other in the presence of tap water, it is considered that a silicon-based hydroxide or gel-like silicon-based hydrate is formed as a lubricating film on the sliding surfaces to protect the sliding surfaces. It is also considered that no such film is formed on sliding surfaces when the sliding surfaces of ceramic bearings are held in sliding contact with each other in the presence of pure water or ultrapure water which contains extremely low dissolved oxygen.

As described above, SiC (α-SiC) has excellent properties for use as a sliding material. If SiC (α-SiC) is used as the material of bearings of rotary machinery which handles pure water or ultrapure water, however, it often encounters damage trouble of unknown cause. The damage may occur not only to the sliding portions of SiC sliding members, but also to the fluid-contact portions of the sliding members.

Attention was paid to the erosion resistance of an SiC sintered body because of the damaged state thereof, and the following test was conducted. As a result of the test, it has been found that the erosion resistance differs depending on the properties of the SiC crystal system and the structure. It has also been revealed that the damage to SiC is not simple erosion, but erosive and corrosive damage. Specifically, when a fluid having a certain current speed is caused to impinge upon a specimen comprising an SiC sintered body, no damage is caused to the SiC if the fluid is tap water having an electrical resistivity of 0.01 MΩ·cm. On the other hand, damage is caused to the SiC if the fluid is ultrapure water having an electrical resistivity of 10 MΩ·cm.

The cause of the results is not necessarily clear. However, it is considered as one cause that when ultrapure water is caused to impinge upon the SiC sintered body at a certain current speed, the grain boundary of the SiC crystal is damaged, causing SiC particles to drop off. It is also considered that when the surface is significantly roughened by the drop-off of SiC particles, bearings and seal members of rotary machinery, which incorporate the SiC sintered body, tend to cause abnormally high torques.

The present invention has been made in view of the above situation in the related art. It is therefore an object of the present invention to provide a ceramics sliding member for use in pure water which can be used stably over a long period of time while minimizing damage due to erosion or the like when used in pure water or ultrapure water.

The present invention provides a ceramics sliding member for use in ultrapure water or pure water, the ceramics sliding member being made of an SiC sintered body, wherein the SiC sintered body includes β-SiC at a ratio of 20% or more thereto and has an average crystal structure whose aspect ratio is 2 or greater.

It has been confirmed that an SiC ceramics sliding member, which includes β-SiC at a ratio of 20% or more thereto and has an average crystal structure whose aspect ratio is 2 or greater, can be used stably over a long period of time while minimizing damage due to erosion or the like when used in ultrapure water for a long time. This is considered to be due to the fact that an SiC sintered body containing β-SiC, which is of a zincblende structure and has a cubic crystal system, has an SiC crystal structure liable to become acicular, and since this tendency is stronger as the proportion of β-SiC in the SiC sintered body is greater, the acicular crystals are strongly intertwined with each other, exhibiting good frictional wear characteristics under strict sliding conditions, and that with respect to the erosion resistance, the acicular crystals are strongly intertwined with each other to minimize the drop-off of SiC particles, and as the aspect ratio (vertical-to-horizontal ratio) of the SiC crystal structure is greater, many crystals are strongly intertwined with each other to minimize the drop-off of SiC particles.

Preferably, the SiC sintered body has a maximum crystal particle diameter of 200 µm and an average crystal particle diameter of 20 µm or smaller.

It has been confirmed that a SiC ceramics sliding member whose maximum crystal particle diameter is 200 µm and average crystal particle diameter is 20 µm or smaller is almost not roughened on its surface and have a good surface state even when used in ultrapure water over a long period of time. This is considered to be due to the fact that as the crystal particle diameter is smaller, SiC particles are less liable to drop off the SiC sintered body, so that the SiC sintered body is damaged more uniformly and prevents the fluid from entering deeply thereinto, further reducing damage thereto and minimizing the surface roughening.

Preferably, the proportion of β-SiC in SiC of SiC material powder before being sintered is 90% or greater.

When SiC material powder in which the proportion of β-SiC in SiC is 90% or greater is sintered, an SiC sintered body in which the proportion of β-SiC in SiC is 20% or greater is easily manufactured.

According to the present invention, a ceramics sliding member can be used stably over a long period of time while minimizing damage due to erosion or the like of not only a sliding surface, but also a fluid-contacting surface, even when the ceramics sliding member is used in pure water or ultrapure water for a long time.

### Brief Description of Drawings

FIG. 1 is a cross-sectional view of a canned motor pump incorporating ceramics sliding members according to an embodiment of the present invention, which are applied to ceramic bearings;
FIG. 2 is a schematic view of an erosion test apparatus; and
FIG. 3 is a cross-sectional view showing a portion of a rotary machine for use in pure water which incorporates ceramics sliding members according to another embodiment of the present invention, which are applied to ceramic seal members.

### Best Mode for Carrying Out the Invention

Embodiments of the present invention will be described below with reference to the drawings.

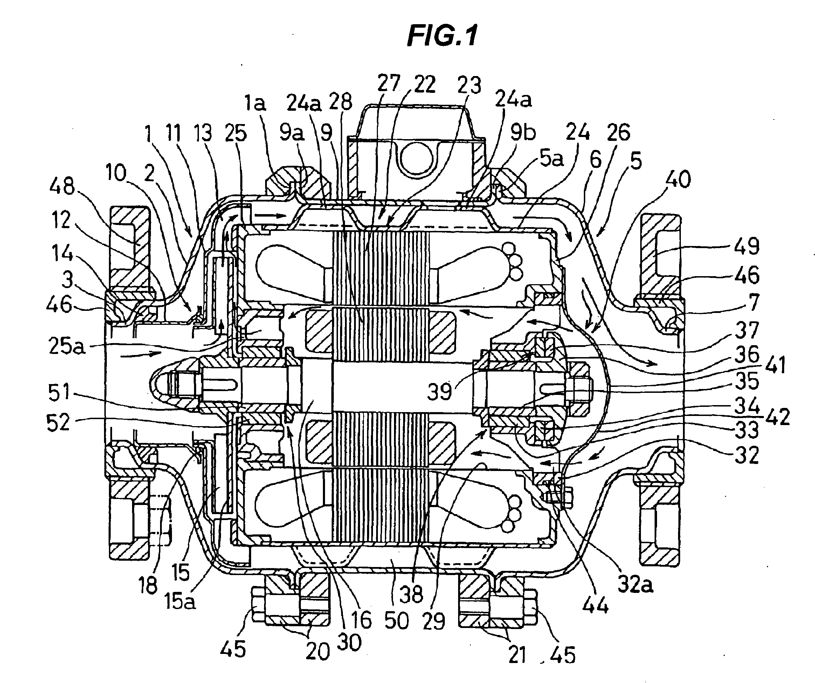

FIG. 1 shows a canned motor pump incorporating ceramics sliding members according to an embodiment of the present invention, which are applied to ceramic bearings. As shown in FIG. 1, the canned motor pump comprises a suction casing 1, a discharge casing 5, and an outer tube 9 interconnecting the suction casing 1 and the discharge casing 5. The suction casing 1, the discharge casing 5, and the outer tube 9 have ledges 1a, 9a, 9b, 5a extending outwardly from outer circumferential surfaces of open ends thereof. The suction casing 1 and the outer tube 9 are integrally connected to each other by cast flanges 20, 20 made of cast iron or the like which grip the adjacent ledges 1a, 9a and bolts 45 tightened to fasten the flanges 20, 20 to each other. Similarly, the discharge casing 5 and the outer tube 9 are integrally connected to each other by cast flanges 21, 21 made of cast iron or the like which grip the adjacent ledges 5a, 9b and bolts 45 tightened to fasten the flanges 21, 21 to each other. The suction casing 1, the discharge casing 5, and the outer tube 9 jointly make up a pump casing which houses a canned motor 22 therein.

The suction casing 1 comprises a substantially frustoconical main body 2 and a suction nozzle 3 extending from the main body 2 toward a suction side. Essentially as is the case with the suction casing 1, the discharge casing 5 comprises a frustoconical main body 6 and a discharge nozzle 7 extending from the main body 6 toward a discharge side.

The suction casing 1 houses therein an inner casing 10 comprising a vessel-like main body 11 and a hollow cylindrical suction side member 12 extending from the main body 11 toward the suction side. A seal member 18 comprising an elastic member, such as an O-ring or the like, is interposed between the main body 11 and the suction side member 12. A guide device 13, which provides guide vanes or volute, is disposed in the main body 11 of the inner casing 10. The guide device 13 has a faucet joint portion which is fitted in a motor frame 23 of the canned motor 22. The motor frame 23 of the canned motor 22 is of high rigidity. Since the guide device 13 is supported by the motor frame 23, the inner casing 10 is supported by the motor frame 23 of the canned motor 22 which is of high rigidity.

The suction side member 12 of the inner casing 10 has an end extending to a position near the suction nozzle 3. A seal member 14 is disposed in a gap between the end of the suction side member 12 of the inner casing 10 and the suction nozzle 3 of the suction casing 1. The seal member 14 provides a seal between the suction side (low-pressure side) and the discharge side (high-pressure side).

Impeller 15 is housed in the inner casing 10 and fixed to and supported on a main shaft 16 of the canned motor 22. A suction flange 48 and a discharge flange 49 are fixed respectively to the suction nozzle 3 and the discharge nozzle 7 with intermediate rings 46, 46 interposed respectively therebetween.

The motor frame 23 of the canned motor 22 comprises a substantially cylindrical frame outer barrel 24 and frame side plates 25, 26 disposed respectively in opposite openings of the frame outer barrel 24. The frame outer barrel 24 has a plurality of axially extending radial ribs 24a on an outer circumferential surface thereof. The ribs 24a are integrally formed on the frame outer barrel 24 by pressing. The ribs 24a have respective outer side surfaces fitted against the inner circumferential surface of the outer tube 9 of the pump casing. The ribs 24 and the outer tube 9 are integrally joined to each other by spot welding or the like where they are fitted with each other.

A stator 27 and a rotor 28 are disposed in the motor frame 23. The rotor 28 is supported by the main shaft 16, and a cylindrical can 29 is fitted in the stator 27. Between the frame side plate 25 and the main shaft 16, there is disposed a ceramics bearing (ceramics sliding member) 30 as a radial slide bearing.

The ceramics bearing (ceramics sliding member) 30 comprises an inner ring 51 serving as a rotatable member which is fixed to the main shaft 16 for rotation in unison with the main shaft 16, and an outer ring 52 serving as a fixed member which is fixed to the frame side plate 25. Both the inner ring (rotatable member) 51 and the outer ring (fixed member) 52 of the ceramics bearing 30 comprise an SiC sintered body including β-SiC at a ratio of 20% or more to SiC and having an average crystal structure whose aspect ratio is 2 or greater.

In this example, both the inner ring 51 and the outer ring 52 comprise an SiC sintered body including β-SiC at a ratio of 20% or more to SiC and having an average crystal structure whose aspect ratio is 2 or greater. However, only one of the inner ring 51 and the outer ring 52 may comprise an SiC sintered body including β-SiC at a ratio of 20% or more to SiC and having an average crystal structure whose aspect ratio is 2 or greater.

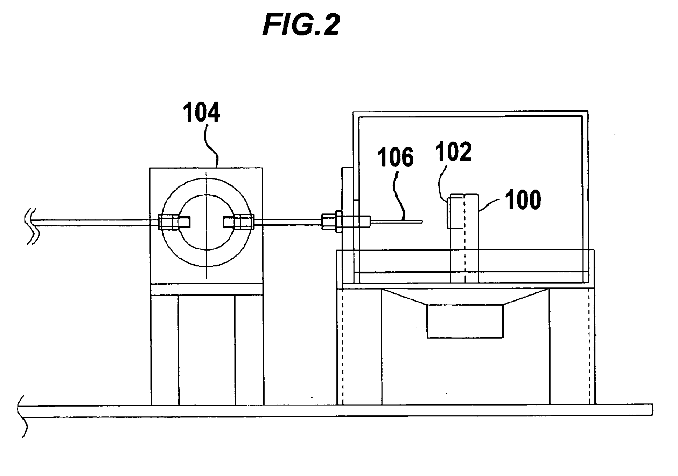

Using an erosion test apparatus shown in FIG. 2, an erosion test was conducted on specimens comprising various SiC sintered bodies having different crystal systems and crystal structures. The results of the erosion test are shown in Table 2. The erosion test apparatus shown in FIG. 2 is configured such that an ejection nozzle 106 ejects water (ultrapure water or tap water) delivered from a water pump 104 toward a surface of a specimen 102 that is vertically held by a holder 100. The water ejected from the ejection nozzle 106 had a current speed of 28 m/s and a temperature of 30°C. The erosion test was conducted for a test time of 100h. The distance from the ejection nozzle 106 to the test piece 102 was 25 mm.

**[Table 2]**

| Water type | Material powder | β-SiC ratio (%) | Aspect ratio | Crystal particle diameter (µm) | | Eroded quantity (mm³) | Surface state after test |
|---|---|---|---|---|---|---|---|
| | | | | Average | Maximum | | |
| Ultra-pure water | β-SiC | 20 | 2-4 | 5 | 10 | ○ | △ |
| | | | | | | 0.006 | Slightly roughened |
| Ultra-pure water | β-SiC | 60 | 6-30 | 20 | 200 | ○ | ○ |
| | | | | | | 0.010 | Almost not roughened |
| Ultra-pure water | β-SiC | 5 | 2-15 | 20 | 200 | △ | × |
| | | | | | | 0.017 | Roughened |
| Ultra-pure water | β-SiC | 100 | 1-1.5 | 3 | 15 | △ | ○ |
| | | | | | | 0.018 | Almost not roughened |
| Ultra-pure water | β-SiC | 0 | 4-30 | 100 | 500 | × | × |
| | | | | | | 0.037 | Highly roughened |
| Ultra-pure water | α-SiC | 0 | 1-2 | 10 | 15 | × | × |
| | | | | | | 0.040 | Highly roughened |
| Tap water | α-SiC | 0 | 1-2 | 10 | 15 | ○ | ○ |
| | | | | | | 0 | No abnormality |

In Table 2, the aspect ratio and the crystal particle diameter represent values obtained when arbitrary portions of structure photographs (about 70 mm × about 90 mm) were taken at magnifications × 100 and × 500, and measured. The crystal particle diameter represents numerical values indicating longer ones of vertical and horizontal particle diameters. The β-SiC ratio represents the ratio of β-SiC in the SiC sintered bodies after they are sintered.

It can be seen from Table 2 that those specimens (SiC sintered bodies), which include β-SiC at a ratio of 20% or more in the SiC sintered body and have an average crystal structure whose aspect ratio is 2 or greater, have an eroded quantity of 0.010 (mm³) or smaller, and can be used stably over a long period of time while minimizing damage due to erosion or the like when used in ultrapure water for a long time. This is considered to be due to the fact that an SiC sintered body containing β-SiC, which is of a zincblende structure and has a cubic crystal system, has an SiC crystal structure liable to become acicular, and since this tendency is stronger as the proportion of β-SiC in the SiC sintered body is greater, the acicular crystals are strongly intertwined with each other, exhibiting good frictional wear characteristics under strict sliding conditions, and that with respect to the erosion resistance, the acicular crystals are strongly intertwined with each other to minimize the drop-off of SiC particles, and as the aspect ratio (vertical-to-horizontal ratio) of the SiC crystal structure is greater, many crystals are strongly intertwined with each other to minimize the drop-off of SiC particles.

It can also be seen that those specimens (SiC sintered bodies) whose maximum crystal particle diameter is 200 µm and average crystal particle diameter is 20 µm or smaller are almost not roughened on their surfaces and have a good surface state after the test. This is considered to be due to the fact that as the crystal particle diameter is smaller, SiC particles are less liable to drop off the SiC sintered body, so that the SiC sintered body is damaged more uniformly and prevents the fluid from entering deeply thereinto, further reducing damage thereto and minimizing the surface roughening. Consequently, it is preferable that the inner ring 51 and the outer ring 52 be made of an SiC sintered body whose maximum crystal particle diameter is 200 µm and average crystal particle diameter is 20 µm or smaller.

Even if the starting material of an SiC sintered body consists of β-SiC material powder, the SiC sintered body contains not only β-SiC, but also α-SiC. It is known that the proportion of β-SiC varies depending on sintering conditions or the like. If an SiC sintered body contains a crystal structure of β-SiC in part, then it contains another structure of α-SiC. If the proportion of β-SiC in SiC of SiC material powder before being sintered is 90% or greater, then it is easy to manufacture an SiC sintered body in which the proportion of β-SiC in SiC is 20% or greater.

A bearing housing 32 is detachably mounted on the frame side plate 26 with an elastic body 44 interposed therebetween. The bearing housing 32 holds an outer ring 33 and a fixed ring 34, respectively. The outer ring 33 is configured to slide against an inner ring 35 fixedly mounted on the main shaft 16. The outer ring 33 and the inner ring 35 jointly make up a ceramics bearing (radial slide bearing) 38 which is similar in structure to the above-described ceramics bearing (ceramics sliding member) 30.

A thrust disc 36 is fixed to the end of the main shaft 16 near the discharge side. The thrust disc 36 has a rotatable ring 37 disposed in confronting relation to and slidable against the fixed ring 34. The fixed ring (fixed member) 34 and the rotatable ring (rotatable member) 37 jointly make up a ceramics bearing (ceramics sliding member) 39 as a thrust slide bearing. As is the case with the inner ring 51 and the outer ring 52 of the ceramics bearing 30, the fixed ring 34 and the rotatable ring 37 of the ceramics bearing (thrust slide member) 39 are made of a SiC sintered body including β-SiC at a ratio of 20% or more to SiC and having an average crystal structure whose aspect ratio is 2 or greater, or preferably a SiC sintered body whose maximum crystal particle diameter is 200 µm and average crystal particle diameter is 20 µm or smaller. Alternatively, one of the fixed ring 34 and the rotatable ring 37 may be made of a SiC sintered body including β-SiC at a ratio of 20% or more to SiC and having an average crystal structure whose aspect ratio is 2 or greater.

An end plate 40, which serves as a filter, is fixed to the frame side plate 26. The end plate 40 has a rectifier 41 projecting in a substantially semispherical shape and having a plurality of slits 42 defined therein which extend radially outwardly. The rectifier 41 of the end plate 40 is of a substantially semispherical shape extending along the streamlines of flows in the discharge casing 5. The fluid, which is discharged from the impeller 15, passes through a passage 50 defined between the outer tube 9 and the frame outer barrel 24 and flows into the discharge casing 5. Thereafter, the fluid is rectified by the rectifier 41 and guided into the discharge port.

The radial slits 42 that are defined in the rectifier 41 function as a filter which traps and removes foreign matter in the fluid when the fluid flows through the slits 42 into the canned motor 22. Since the slits 42 are defined along the directions of the flows, the foreign matter trapped by the slits 42 is moved in the directions of the flows because of the current speed of the fluid, and then removed from the slits 42, which are thus prevented from becoming clogged. In other words, the slits 42 are shaped to have a self-cleaning action. The end plate 40 also serves as a presser plate for secure the bearing housing 32 to the frame side plate 26.

Operation of the canned motor pump will be described below. The fluid drawn in from the suction nozzle 3 passes through the suction side member 12 of the inner casing 10 and flows into the impeller 15. The fluid is discharged from the impeller 15 as they rotate, and flows through the guide device 13 which changes the direction of the fluid from the centrifugal direction to the axial direction. Thereafter, the fluid flows into the passage 50 defined between the outer tube 9 and the frame outer barrel 24 of the canned motor 22, and then flows through the passage 50 into the discharge casing 5. Subsequently, the fluid is rectified by the rectifier 41 of the end plate 40, and then discharged from the discharge nozzle 7 that is integral with the discharge casing 5.

A gap is defined between a main plate 15a of the impeller 15 and the frame side plate 25. When the impeller 15 rotates, disc friction occurs in the gap, developing a pressure reducing effect in the gap. Therefore, a circulatory path is formed for the fluid which flows through the slits 42 in the end plate 40 into the canned motor 22 to pass through openings 32a in the bearing housing 32 and then through the gap between the rotor 28 and the can 29 of the stator 27 and from openings 25a in the frame side plate 25 to the rear side of the main plate 15a of the impeller 15, as indicated by arrows. While the handled fluid is circulating in the canned motor 22, the handled fluid lubricates the sliding surfaces of the ceramics bearings 30, 38, 39, and simultaneously cools the canned motor 22.

Even if the handled fluid comprises pure water having an electrical resistivity of 1 MΩ·cm or higher or ultrapure water having an electrical resistivity of 10 MΩ·cm or higher, any wear caused to the slide surfaces and fluid-contacting surfaces of the ceramics bearings 30, 38, 39 is suppressed to a minimum, making it possible for the ceramics bearings 30, 38, 39 to be used stably over a long period of time.

In the above embodiment, the ceramic sliding members are incorporated in the canned motor pump, which includes the ceramics bearings, as the ceramics bearings. However, the ceramic sliding members may be incorporated in rotary machines, which includes ceramic seal members of SiC, as ceramics seal members.

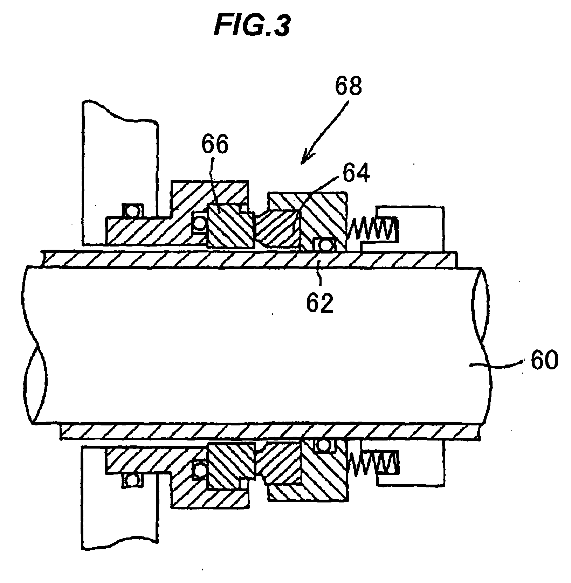

FIG. 3 shows a portion of a rotary machine for use in pure water which incorporates ceramics sliding members according to another embodiment of the present invention, which are applied to ceramic seal members. In this embodiment, a sleeve 62 is mounted on a rotatable shaft 60, and the periphery of the sleeve 62 is sealed by a mechanical seal 68 comprising a movable seal member 64 and a stationary seal member 66 which have respective end faces configured to make sliding contact with each other. In this embodiment, both the movable seal member 64 and the stationary seal member 66 are made of a SiC sintered body including β-SiC at a ratio of 20% or more to SiC and having an average crystal structure whose aspect ratio is 2 or greater, or preferably a SiC sintered body whose maximum crystal particle diameter is 200 µm and average crystal particle diameter is 20 µm or smaller. Alternatively, only one of the movable seal member 64 and the stationary seal member 66 may be made of a SiC sintered body including β-SiC at a ratio of 20% or more to SiC and having an average crystal structure whose aspect ratio is 2 or greater, and the other of SiC or another ceramics.

According to this embodiment, even if the handled fluid comprises pure water having an electrical resistivity of 1 MΩ·cm or higher or ultrapure water having an electrical resistivity of 10 MΩ·cm or higher, any wear caused to the slide surfaces and fluid-contacting surfaces of the movable seal member 64 and the stationary seal member 66 of the mechanical seal 68 is suppressed to a minimum, making it possible for the mechanical seal 68 to be used stably over a long period of time.

### Industrial Applicability

The present invention is applicable to a ceramics sliding member for use as a bearing, a mechanical seal, etc. of rotary machinery in ultrapure water having an electrical resistivity of 10 MΩ·cm or higher or pure water having an electrical resistivity of 1 MΩ·cm or higher.

## Claims

1. A ceramics sliding member for use in ultrapure water or pure water, the ceramics sliding member being made of an SiC sintered body, wherein
the SiC sintered body includes β-SiC at a ratio of 20% or more thereto and has an average crystal structure whose aspect ratio is 2 or greater.

2. A ceramics sliding member according to claim 1, wherein the SiC sintered body has a maximum crystal particle diameter of 200 µm and an average crystal particle diameter of 20 µm or smaller.

3. A ceramics sliding member according to claim 1 or 2, wherein the proportion of β-SiC in SiC of SiC material powder before being sintered is 90% or greater.
